# EUROPEAN PATENT APPLICATION

(11) **EP 3 382 241 A1**
(43) Date of publication of application: **03.10.2018**
(21) Application number: 16868530.3
(22) Date of filing: 22.11.2016
(51) Int. Cl.: F16J 15/3244, F16J 15/3232, F16J 15/40

(54) **SEALING DEVICE**

(30) Priority: 24.11.2015 JP 2015228742; 30.11.2015 JP 2015233024
(71) Applicant: NOK Corporation, Minato-ku Tokyo 105-8585 (JP)
(72) Inventor: NAKAGAWA Takehiro, Fukushima-shi Fukushima 960-1102 (JP); NODA Junichi, Fukushima-shi Fukushima 960-1102 (JP); ONO Shigeyuki, Fukushima-shi Fukushima 960-1102 (JP)
(74) Representative: TBK
(86) International application number: PCT/JP2016/084535
(87) International publication number: WO 2017/090583

(57) **Abstract**

Occurrence of static leakage is suppressed in a sealing device in which a sealing lip slidably comes into contact with a sealing flange, and a thread groove that exhibits a fluid pumping action during rotation is provided in the sealing flange. To achieve this object, a sealing device performs sealing between a housing and a rotating shaft inserted into a shaft hole provided in the housing so as to prevent a sealed fluid on a machine inner side from leaking to a machine outer side. A sealing lip mounted on an inner periphery of the shaft hole of the housing slidably comes into contact with a sealing flange mounted on an outer periphery of the rotating shaft. A thread groove that exhibits a fluid pumping action during the rotation of the rotating shaft is provided in the sealing flange so as to intersect an edge of the sealing lip. An inner peripheral tube portion is provided on an attachment ring that holds the sealing lip. An inner peripheral lip that slidably comes into contact with the inner peripheral tube portion is provided on the sealing flange side on the inner peripheral side of the thread groove.

## Description

### BACKGROUND OF THE INVENTION

### Field of the Invention

The present invention relates to a sealing device that suppresses leakage of a sealed fluid inside a machine to the outside of the machine in automobiles, general machines, industrial machines, or the like. The sealing device of the invention is used as, for example, an oil seal for rotation that seals an oil inside the machine in an automobile-related field.

### Description of the Conventional Art

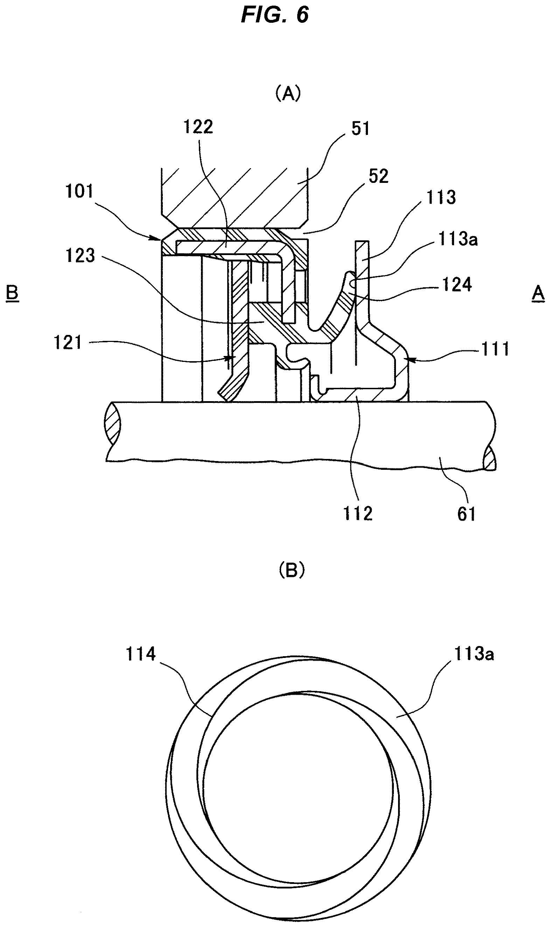

As illustrated in (A) and (B) of Fig. 6, there has been known a sealing device 101 that performs sealing between a housing 51 and a rotating shaft 61 inserted into a shaft hole 52 provided in the housing 51 so as to prevent a sealed fluid on a machine inner side A from leaking to a machine outer side B, and which is configured by the combination of a slinger 111 mounted on an outer periphery of the rotating shaft 61, and a lip seal member 121 located on the machine outer side B of the slinger 111 and mounted on an inner periphery of the shaft hole 52 of the housing 51.

The slinger 111 integrally has a tubular portion 112 that is made of a steel material, such as metal, and is fitted to an outer peripheral surface of the rotating shaft 61, and a sealing flange 113 provided at one end of the tubular portion 112. A machine-outside end face 113a of the sealing flange 113 is provided with thread groove 114 that exhibits a fluid pumping action resulting from a centrifugal force during rotation.

Meanwhile, the lip seal member 121 has an attachment ring 122 fitted to an inner peripheral surface of the shaft hole 52 of the housing 51, and a rubber-like elastic body 123 attached to the attachment ring 122. A sealing lip (end face lip) 124 that slidably comes into contact with the machine-outside end face 113a of the sealing flange 113 in the slinger 111 is provided by the rubber-like elastic body 123.

Since the sealing device 101 of the above configuration seals the sealed fluid as the sealing lip 124 slidably comes into contact with the machine-outside end face 113a of the sealing flange 113, and the thread groove 114 provided in the machine-outside end face 113a of the sealing flange 113 exhibits the fluid pumping action resulting from the centrifugal force during rotation and pushes the sealed fluid back to the machine inner side A, it is possible to exhibit an excellent sealing effect.

### PRIOR ART DOCUMENT

### Patent Documents

Patent Document 1: Japanese Utility Model Registration Application Laid-Open No. 3-57563
Patent Document 2: Japanese Patent Application Laid-Open No. 2-113173
Patent Document 3: Japanese Patent Application Laid-Open No. 2014-129837

### SUMMARY OF THE INVENTION

### Problem to be Solved by the Invention

However, further improvements of functions are required in the following points for the above sealing device 101.

That is, in the above sealing device 101, as described above, the sealing device 101 is able to seal the sealed fluid as the sealing lip 124 slidably comes into contact with the machine-outside end face 113a of the sealing flange 113, and the thread groove 114 provided in the machine-outside end face 113a of the sealing flange 113 exhibits the fluid pumping action resulting from the centrifugal force during rotation and pushes the sealed fluid back to the machine inner side A. Therefore, it is possible to exhibit an excellent sealing effect. However, as the configuration of the sealing device 101, the thread groove 114 is disposed so as to intersect an edge of the sealing lip 124. Hence, if a situation occurs in which the rotation of the rotating shaft 61 stops and the centrifugal force disappears, and accordingly, the fluid pumping action by the thread groove 114 is not exhibited, there is a concern that the sealed fluid passes through the edge of the sealing lip 124 from an outer peripheral side of the seal lip to an inner peripheral side thereof via the thread groove 114 and leaks to the machine outer side B (so-called static leakage occurs).

In view of the above points, an object of the invention is to provide a sealing device capable of suppressing occurrence of static leakage in a sealing device in which a sealing lip slidably comes into contact with a sealing flange, and a thread groove that exhibits a fluid pumping action during rotation is provided in the sealing flange.

### Means for Solving the Problem

The invention adopts the following means in order to achieve the above object.

A sealing device of the invention is a sealing device that performs sealing between a housing and a rotating shaft inserted into a shaft hole provided in the housing so as to prevent a sealed fluid on a machine inner side from leaking to a machine outer side, a sealing lip mounted on an inner periphery of the shaft hole of the housing slidably comes into contact with a sealing flange mounted on an outer periphery of the rotating shaft, a thread groove that exhibits a fluid pumping action during the rotation of the rotating shaft is provided in the sealing flange so as to intersect an edge of the sealing lip, an inner peripheral tube portion is provided on an attachment ring that holds the sealing lip, and an inner peripheral lip that slidably comes into contact with the inner peripheral tube portion is provided on the sealing flange side on an inner peripheral side of the thread groove (Claim 1).

According to the sealing device of the invention, the inner peripheral tube portion is provided in the attachment ring that holds the sealing lip, and the inner peripheral lip that slidably comes into contact with this inner peripheral tube portion is located on the inner peripheral side of the thread groove and provided on the sealing flange side. Therefore, if the sealed fluid passes through the sealing lip via the thread groove, the inner peripheral lip seals the sealed fluid. Hence, it is possible to suppress leakage of the sealed fluid to the machine outer side.

Additionally, in the sealing device of the invention based on the sealing device (Claim 1), the inner peripheral lip is separated from the inner peripheral tube portion by being elastically deformed due to a centrifugal force during rotation (Claim 2).

According to this configuration, the inner peripheral lip is separated from the inner peripheral tube portion during rotation. Therefore, it is possible to suppress an increase in sliding torque.

Additionally, in the sealing device of the invention based on the above sealing device (Claim 1 or 2), an inner peripheral sealing portion that comes into contact with the rotating shaft is provided on the sealing flange side, and the inner peripheral sealing portion is integrated with the inner peripheral lip via a through-hole-like communication part provided in the sealing flange (Claim 3).

According to this configuration, the inner peripheral sealing portion that comes into contact with the rotating shaft is provided on the sealing flange side. Therefore, it is possible to seal a gap between the rotating shaft and the sealing flange by the inner peripheral sealing portion, and to suppress leakage of the sealed fluid from the gap between the rotating shaft and the sealing flange to the machine outer side. Additionally, since the inner peripheral sealing portion is integrated with the inner peripheral lip via the through-hole-like communication part provided in the sealing flange, the number of components of the sealing device is not increased even if the inner peripheral sealing portion is provided.

### Effect of the Invention

According to the invention, it is possible to suppress the occurrence of static leakage in the sealing device in which the sealing lip slidably comes into contact with the sealing flange, and the thread groove that exhibits the fluid pumping action during rotation is provided in the sealing flange.

### BRIEF EXPLANATION OF THE DRAWINGS

Fig. 1 is a sectional view of main parts of a sealing device related to a first embodiment of the invention;
Fig. 2 is an explanatory view of a thread groove provided in the sealing device, and is a view as seen in an arrow direction C in Fig. 1;
Fig. 3 is a sectional view of main parts of a sealing device related to a second embodiment of the invention;
Fig. 4 is a sectional view of main parts of a sealing device related to a reference example;
Fig. 5 is an explanatory view of a thread groove provided in the sealing device, and is a view as seen in an arrow direction D in Fig. 4; and
Fig. 6 is a view illustrating a conventional example, (A) is a sectional view of main parts of a sealing device related to the conventional example, and (B) is an explanatory view of a thread groove provided in the sealing device.

### DETAILED DESCRIPTION OF PREFERRED EMBODIMENTS

Next, embodiments of the invention will be described below with reference to the drawings.

### First Embodiment

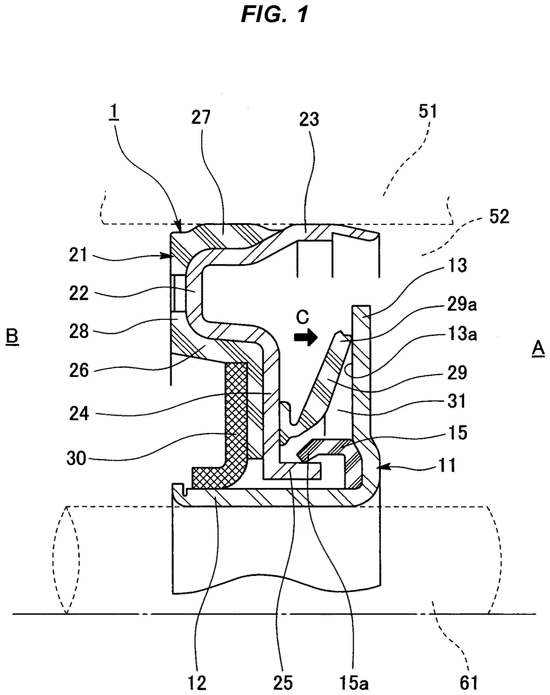

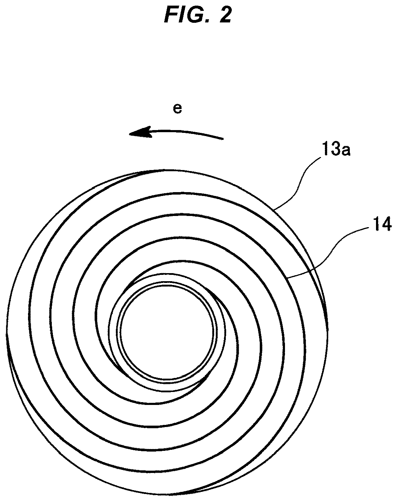

Figs. 1 and 2 illustrate a sealing device 1 related to an embodiment of the invention.

The sealing device 1 related to the embodiment is a sealing device (for example, an engine oil seal) 1 that performs sealing between a housing (sealing housing) 51 and a rotating shaft 61 inserted into a shaft hole 52 provided in the housing 51 so as to prevent a sealed fluid (oil or the like) on a machine inner side A from leaking to a machine outer side B, and is configured by the combination of a slinger 11 mounted on an outer periphery of the rotating shaft 61, and a lip seal member 21 located on the machine outer side B of the slinger 11 and mounted on an inner periphery of the shaft hole 52 of the housing 51.

The slinger 11 integrally has a tubular portion (sleeve portion) 12 that is made of a steel material, such as metal, and is fixed (fitted) to an outer peripheral surface of the rotating shaft 61, and a radially outward sealing flange (flange portion) 13 provided at one end (the machine inner side end part) of the tubular portion 12. As illustrated in Fig. 2, a machine-outside end face 13a of the sealing flange 13 is provided with a spiral thread groove 14 that exhibits the action of pushing back a sealed fluid toward an outer peripheral side (machine inner side A) by exhibiting a pumping action resulting from a centrifugal force during the rotation of the rotating shaft 61. Arrow e indicates a rotational direction of the rotating shaft 61.

The lip seal member 21 has an attachment ring 22 that is fixed (fitted) to an inner peripheral surface of the shaft hole 52 of the housing 51 and is made of a steel material, such as metal, and a rubber-like elastic body 26 attached (vulcanized and bonded) to the attachment ring 22. An outer peripheral sealing portion 27 that performs sealing between the housing 51 and the attachment ring 22 by coming into contact with the inner peripheral surface the shaft hole 52 of the housing 51, an end face attached portion 28 attached to an end face part of the attachment ring 22, and a sealing lip (end face lip) 29 that slidably comes into contact with the machine-outside end face 13a of the sealing flange 13 in the slinger 11 are integrally provided by the rubber-like elastic body 26. The sealing lip 29 slidably comes into contact with the machine-outside end face 13a of the sealing flange 13 with its lip edge 29a, and is disposed such that the lip edge 29a of the sealing lip 29 and the thread groove 14 intersect each other. Additionally, although the dust lip 30 is located on and attached to an inner peripheral side of the end face attached portion 28, and the dust lip 30 is made of fabric, the dust lip 30 may be integrally provided by the above rubber-like elastic body 26.

The attachment ring 22 integrally has an outer peripheral tube portion 23 fixed (fitted) to the inner peripheral surface of the shaft hole 52 of the housing 51, and a radially inward flange portion 24 provided at one end (machine-outside end part) of the outer peripheral tube portion 23.

Additionally, in this embodiment, particularly, an inner peripheral tube portion 25 is integrally provided from an inner peripheral end part of the flange portion 24, which is an inner peripheral end part of the attachment ring 22, toward the machine inner side A, and an inner peripheral lip 15, which slidably comes into contact with the inner peripheral tube portion 25 is located on an inner peripheral side of the thread groove 14 and is provided in the slinger 11.

The inner peripheral tube portion 25 is disposed on an inner peripheral side of the rubber-like elastic body 26, protrudes from the rubber-like elastic body 26, and is disposed within a space 31 on an inner peripheral side of the sealing lip 29 (a space surrounded by the sealing lip 29, the slinger 11, and the dust lip 30).

The inner peripheral lip 15 is molded of a rubber-like elastic body of the same kind as or different kind from the above rubber-like elastic body 26, is fixed (attached) to the slinger 11, and is rotated together with the slinger 11. Additionally, the inner peripheral lip 15 slidably comes into contact with an outer peripheral surface of the inner peripheral tube portion 25 with its lip edge 15a. However, if the rotating shaft 61 rotates and reaches a predetermined rotating speed, the inner peripheral lip 15 is elastically deformed so as to open in the shape of a trumpet due to the centrifugal force, and thereby, is configured such that the lip edge 15a separates from the outer peripheral surface of the inner peripheral tube portion 25.

In the sealing device 1 of the above configuration, during the rotation of the rotating shaft 61, the sealing lip 29 slidably comes into contact with the machine-outside end face 13a of the sealing flange 13 of the slinger 11 with its lip edge 29a. Accordingly, in addition to exhibiting a sealing function, the slinger 11 that rotates together with the rotating shaft 61 exhibits a fluid shake-off action by the sealing flange 13 and exhibits a fluid pumping action by the thread groove 14. Therefore, even if there is a fluid that passes through between the sealing lip 29 and the sealing flange 13, it is possible to push this fluid back to the outer peripheral side (the machine inner side A), and thus, an excellent sealing function is exhibited.

Additionally, if the rotation of the rotating shaft 61 stops and the centrifugal force disappears and accordingly the above fluid shake-off action and fluid pumping action temporary stop, there is a concern that a portion of the sealed fluid flows out of the machine inner side A to the inner-peripheral-side space 31 of the sealing lip 29 along the thread groove 14. However, the inner-peripheral-side space 31 of the sealing lip 29 is blocked by the inner peripheral lip 15 coming into contact with the inner peripheral tube portion 25. Hence, since the sealing function is exhibited by the inner peripheral lip 15 and flow-out of the sealed fluid from the inner-peripheral-side space 31 of the sealing lip 29 toward the dust lip 30 is suppressed, leakage of the sealed fluid to the machine outer side B through the dust lip 30 is suppressed.

Additionally, since the inner peripheral lip 15 comes into contact with the inner peripheral tube portion 25 while the rotation of the rotating shaft 61 stops, if the rotating shaft 61 rotates and reaches a predetermined rotating speed, the inner peripheral lip 15 is elastically deformed so as to open in the shape of a trumpet due to the centrifugal force. Accordingly, the lip edge 15a is separated from the outer peripheral surface of the inner peripheral tube portion 25. Hence, since the sliding torque of the entire sealing device 1 hardly increases even if the inner peripheral lip 15 is added compared to the related art, it is possible to suppress a situation in which the sliding torque increases and energy loss or the like occurs.

### Second Embodiment

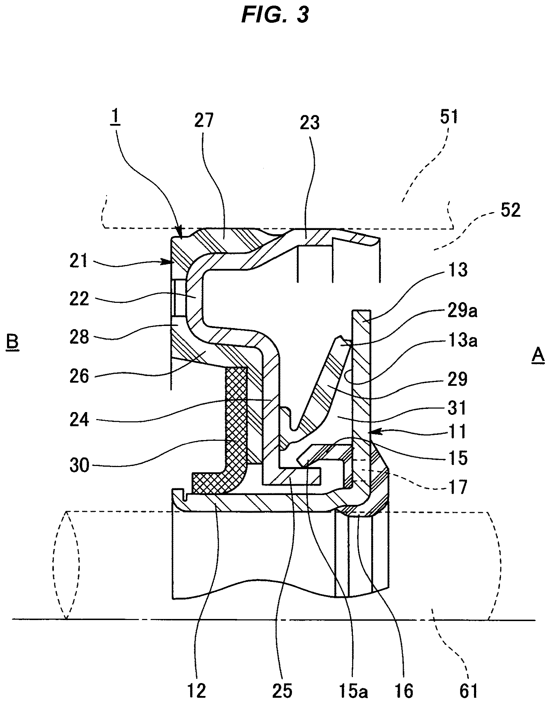

In a sealing device 1 related to a second embodiment illustrated in Fig. 3, in addition to the same configuration as the above first embodiment, an inner peripheral sealing portion 16 which performs sealing between the rotating shaft 61 and the slinger 11 by coming into contact with the outer peripheral surface of the rotating shaft 61, is provided in the slinger 11. Thus, as the inner peripheral sealing portion 16 exhibits a sealing action, leakage of the sealed fluid on the machine inner side A to the machine outer side B via a gap between the rotating shaft 61 and the slinger 11 is suppressed.

The inner peripheral sealing portion 16 is annularly molded of a rubber-like elastic body of the same kind as or different kind from the inner peripheral lip 15, is fixed (attached) to an inner peripheral surface of the tubular portion 12 in the slinger 11, and is fixed (attached) to a machine-inside end face of the sealing flange 13.

In addition, in a case where the inner peripheral sealing portion 16 is molded of a rubber-like elastic body of the same kind as the inner peripheral lip 15, it is possible to integrally mold the inner peripheral sealing portion 16 and the inner peripheral lip 15. Hence, in this case, as illustrated in the drawing, a through-hole-like communication part 17 may be provided in the sealing flange 13 in the slinger 11, and the inner peripheral sealing portion 16 and the inner peripheral lip 15 may be integrally molded via the communication part 17.

Hereinafter, the invention related to a reference example will be described.

### Problem to be Solved by the Invention

An object of the invention related to the reference example is to provide a sealing device capable of suppressing occurrence of static leakage in a sealing device in which a sealing lip slidably comes into contact with a sealing flange, and a thread groove that exhibits a fluid pumping action during rotation is provided in the sealing flange.

### Means for Solving the Problem

The invention related to the reference example adopts the following means in order to achieve the above object.

That is, the invention related to the reference example is a sealing device that performs sealing between a housing and a rotating shaft inserted into a shaft hole provided in the housing so as to prevent a sealed fluid on a machine inner side from leaking to a machine outer side. A sealing lip mounted on an inner periphery of the shaft hole of the housing slidably comes into contact with a sealing flange mounted on an outer periphery of the rotating shaft. A thread groove that exhibits a fluid pumping action during the rotation of the rotating shaft is provided in the sealing flange so as to intersect an edge of the sealing lip. A fluid absorbing member capable of absorbing the sealed fluid is located and provided on an inner peripheral side of the thread groove.

According to the invention related to this reference example, the fluid absorbing member capable of absorbing the sealed fluid is located and provided on the inner peripheral side of the thread groove. Therefore, if the sealed fluid passes through the sealing lip via the thread groove, the fluid absorbing member absorbs and holds the sealed fluid. Hence, it is possible to suppress leakage of the sealed fluid to the machine outer side.

Additionally, the invention relates to the reference example is a sealing device characterized in that the fluid absorbing member is held on the sealing flange side and is rotated together with the sealing flange, in the above sealing device.

According to this configuration, the sealed fluid absorbed and held by the fluid absorbing member is returned radially outward, that is, toward the thread groove, due to the centrifugal force during rotation. The thread groove exhibits the fluid pumping action during rotation. Hence, it is possible to return the sealed fluid absorbed and held by the fluid absorbing member due to the fluid shake-off action exhibited by the fluid absorbing member and the fluid pumping action exhibited by the thread groove to the machine inner side.

The fluid absorbing member is made of non-woven fabric or sponge.

### Effect of Invention

According to the invention related to the reference example, it is possible to suppress the occurrence of static leakage in the sealing device in which the sealing lip slidably comes into contact with the sealing flange, and the thread groove that exhibits the fluid pumping action during rotation is provided in the sealing flange.

### Detailed Description of Preferred Embodiments

Next, embodiments of the invention relate to the reference example will be described with reference to the drawings.

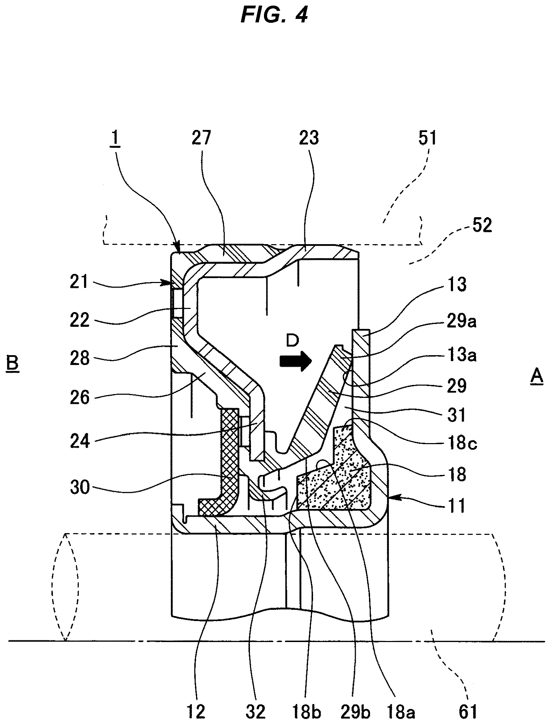

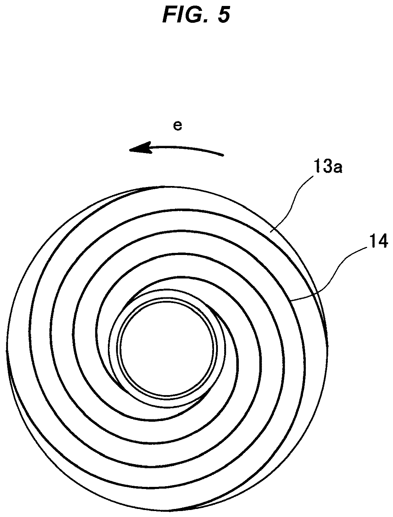

Figs. 4 and 5 illustrate a sealing device 1 related to an embodiment of the invention related to the reference example.

The sealing device 1 related to the embodiment is a sealing device (for example, an engine oil seal) 1 that performs sealing between a housing (sealing housing) 51 and a rotating shaft 61 inserted into a shaft hole 52 provided in the housing 51 so as to prevent a sealed fluid (oil or the like) on a machine inner side A from leaking to a machine outer side B, and is configured by the combination of a slinger 11 mounted on an outer periphery of the rotating shaft 61, and a lip seal member 21 located on the machine outer side B of the slinger 11 and mounted on an inner periphery of the shaft hole 52 of the housing 51.

The slinger 11 integrally has a tubular portion (sleeve portion) 12 that is made of a steel material, such as metal, and is fixed (fitted) to an outer peripheral surface of the rotating shaft 61, and a radially outward sealing flange (flange portion) 13 provided at one end (the machine inner side end part) of the tubular portion 12. As illustrated in Fig. 5, a machine-outside end face 13a of the sealing flange 13 is provided with a spiral thread groove 14 that exhibits the action of pushing back a sealed fluid toward an outer peripheral side (machine inner side A) by exhibiting a pumping action resulting from a centrifugal force during the rotation of the rotating shaft 61. Arrow e indicates a rotational direction of the rotating shaft 61.

Meanwhile, the lip seal member 21 has an attachment ring 22 that is fixed (fitted) to an inner peripheral surface of the shaft hole 52 of the housing 51 and is made of a steel material, such as metal, and a rubber-like elastic body 26 attached (vulcanized and bonded) to the attachment ring 22. An outer peripheral sealing portion 27 that performs sealing between the housing 51 and the attachment ring 22 by coming into contact with the inner peripheral surface of the shaft hole 52 of the housing 51, an end face attached portion 28 attached to an end face part of the attachment ring 22, a sealing lip (end face lip) 29 that slidably comes into contact with the machine-outside end face 13a of the sealing flange 13 in the slinger 11 and a grease storing lip 32 in non-contact with the slinger 11 are integrally provided by the rubber-like elastic body 26. The sealing lip 29 slidably comes into contact with the machine-outside end face 13a of the sealing flange 13 with its lip edge 29a, and is disposed such that the lip edge 29a of the sealing lip 29 and the thread groove 14 intersect each other. Additionally, although the dust lip 30 is located on and attached to an inner peripheral side of the end face attached portion 28, and the dust lip 30 is made of fabric, the dust lip 30 may be integrally provided by the above rubber-like elastic body 26.

The attachment ring 22 integrally has an outer peripheral tube portion 23 fixed (fitted) to the inner peripheral surface of the shaft hole 52 of the housing 51, and a radially inward flange portion 24 provided at one end (machine-outside end part) of the outer peripheral tube portion 23.

Additionally, in the embodiment, particularly, a fluid absorbing member 18 capable of absorbing the sealed fluid is located and provided on an inner peripheral side of the thread groove 14. The fluid absorbing member 18 absorbs and holds the sealed fluid that leaks via the thread groove 14 when the rotation of the rotating shaft 61 is stopped, and is configured as follows.

That is, the fluid absorbing member 18 is annularly formed of a fluid absorber (oil absorber), such as non-woven fabric or sponge, capable of absorbing the sealed fluid (oil), is located on the inner peripheral side of the thread groove 14 in the inner-peripheral-side space 31 of the sealing lip 29, and is attached to an inner corner part between the tubular portion 12 and the sealing flange 13 in the slinger 11. Hence, the fluid absorbing member 18 is held on the slinger 11 side and rotated together with the slinger 11, and is held on the sealing flange 13 side and rotated together with the sealing flange 13.

The sectional shape of the fluid absorbing member 18 is not particularly limited. However, if a tapered outer peripheral surface 18a disposed in proximity to a tapered inner peripheral surface 29b of the sealing lip 29, a planar end face 18b disposed in proximity to the grease storing lip 32, or the like is provided, the filling factor of the sealing lip 29 to the inner-peripheral-side space 31 becomes high. Thus, the sealed fluid does not easily leak toward the dust lip 30. Additionally, if a radially extending part 18c extending radially outward along the machine-outside end face 13a of the sealing flange 13 in the slinger 11 is provided, the fluid shake-off action during rotation to be described below is easily exhibited.

In the sealing device 1 of the above configuration, during the rotation of the rotating shaft 61, the sealing lip 29 slidably comes into contact with the machine-outside end face 13a of the sealing flange 13 of the slinger 11 with its lip edge 29a. Accordingly, in addition to exhibiting a sealing function, the slinger 11 that rotates together with the rotating shaft 61 exhibits a fluid shake-off action by the sealing flange 13 and exhibits a fluid pumping action by the thread groove 14. Therefore, even if there is a fluid that passes through between the sealing lip 29 and the sealing flange 13, it is possible to push this fluid back to the outer peripheral side (the machine inner side A), and thus, an excellent sealing function is exhibited.

Additionally, if the rotation of the rotating shaft 61 stops and the centrifugal force disappears and accordingly the above fluid shake-off action and fluid pumping action temporary stop, there is a concern that a portion of the sealed fluid flows out of the machine inner side A to the inner-peripheral-side space 31 of the sealing lip 29 along the thread groove 14. However, the fluid absorbing member 18 is provided in the inner-peripheral-side space 31 of the sealing lip 29. Hence, since the fluid absorbing member 18 absorbs and holds the sealed fluid even if the sealed fluid passes through the sealing lip 29 via the thread groove 14, it is possible to suppress leakage of the sealed fluid to the machine outer side B.

Additionally, the fluid absorbing member 18 is held on the sealing flange 13 side and rotated together with the sealing flange 13. Thus, the fluid absorbing member 18 exhibits the fluid shake-off action by the centrifugal force during rotation, and the sealed fluid absorbed and held by the fluid absorbing member 18 is returned toward radially outward, that is, toward the thread groove 14 due to the centrifugal force during rotation. The thread groove 14 exhibits the fluid pumping action during rotation as described above. Hence, since the fluid shake-off action by the fluid absorbing members 18 and the fluid pumping action exhibited by the thread groove 14 are exhibited continuously, it is possible to return the sealed fluid absorbed and held by the fluid absorbing member 18 to the machine inner side A. Hence, even from such a viewpoint, excellent sealing performance is exhibited.

In addition, if the radially extending part 18c is provided in the fluid absorbing member 18 as described above, the sealed fluid flows out of the outer peripheral end part of the radially extending part 18c radially outward, that is, toward the thread groove 14. Thus, the sealed fluid easily reaches the thread groove 14. Hence, it is possible to continuously and easily exhibit the fluid shake-off action by the fluid absorbing member 18 and the fluid pumping action by the thread groove 14.

### Description of Reference Numerals

1 sealing device
11 slinger
12 tubular portion
13 sealing flange
13a machine-outside end face
14 thread groove
15 inner peripheral lip
15a, 29a lip edge
16 inner peripheral sealing portion
17 communication part
18 fluid absorbing member
18a tapered outer peripheral surface
18b planar end face
18c radially extending part
21 lip seal member
22 attachment ring
23 outer peripheral tube portion
24 flange portion
25 inner peripheral tube portion
26 rubber-like elastic body
27 outer peripheral sealing portion
28 end face attached portion
29 sealing lip
30 dust lip
31 inner-peripheral-side space
32 grease storing lip
51 housing
52 shaft hole
61 rotating shaft
A machine inner side
B machine outer side

## Claims

1. A sealing device that performs sealing between a housing and a rotating shaft inserted into a shaft hole provided in the housing so as to prevent a sealed fluid on a machine inner side from leaking to a machine outer side,
wherein a sealing lip mounted on an inner periphery of the shaft hole of the housing slidably comes into contact with a sealing flange mounted on an outer periphery of the rotating shaft,
wherein a thread groove that exhibits a fluid pumping action during the rotation of the rotating shaft is provided in the sealing flange so as to intersect an edge of the sealing lip,
wherein an inner peripheral tube portion is provided on an attachment ring that holds the sealing lip, and
wherein an inner peripheral lip that slidably comes into contact with the inner peripheral tube portion is provided on the sealing flange side on an inner peripheral side of the thread groove.

2. The sealing device according to Claim 1,
wherein the inner peripheral lip is separated from the inner peripheral tube portion by being elastically deformed due to a centrifugal force during rotation.

3. The sealing device according to Claim 1 or 2,
wherein an inner peripheral sealing portion that comes into contact with the rotating shaft is provided on the sealing flange side, and
wherein the inner peripheral sealing portion is integrated with the inner peripheral lip via a through-hole-like communication part provided in the sealing flange.
